# FASCICULE DE BREVET EUROPEEN

(11) **EP 1 000 907 B1**
(45) Date de publication et mention de la délivrance du brevet: **01.10.2003**
(21) Numéro de dépôt: 99402767.0
(22) Date de dépôt: 08.11.1999
(51) Int. Cl.: C03B 33/033

(54) **Appareil de coupe pour feuilles de verre**
Schneidevorrichtung für Glasplatten
Cutting apparatus for glass sheets

(30) Priorité: 09.11.1998 DK 144898
(43) Date de publication de la demande: 17.05.2000
(73) Titulaire: SAINT-GOBAIN GLASS FRANCE, 92400 Courbevoie (FR)
(72) Inventeur: Brauer, Harald, 4220 Korsor (DK)
(74) Mandataire: Muller, René

(56) Documents cités:
- FR-A- 1 314 389

## Description

### Domaine technique

L'invention concerne un appareil de coupe de feuilles de verre le long d'une ligne d'incision découpée dans les feuilles, ledit appareil comprenant un châssis de support pour la feuille de verre à couper, un moyen de découpe du verre, tel qu'une molette mobile en acier et au moins une poutre susceptible de casser la feuille de verre.

### Art antérieur

On connaît un appareil pour découper une feuille de verre le long d'une ligne d'incision pratiquée dans celle-ci. L'appareil comprend deux poutres supérieures et une poutre inférieure. Les deux premières poutres sont creuses et pourvues de trous, et une alimentation d'air jusqu'aux cavités dans les poutres produit un coussin d'air entre la feuille de verre et chaque poutre. Toutefois, les moyens d'équilibrage de pression fourni par un coussin d'air n'est pas vraiment satisfaisant dans la mesure où la régulation de la pression d'air sur les poutres est relativement compliquée. Par ailleurs, un bruit gênant accompagne la fuite d'air depuis les poutres.

On sait en outre disposer des coussins sur la poutre, lesdits coussins étant constitués d'un matériau élastique, comme des couches de caoutchouc-mousse en caoutchouc néoprène, polyéthylène, terpolymère vinylique, acrylique ou éthylène/propylène, présentant une dureté de 10 à 25 degrés de dureté du caoutchouc (Degrés internationaux de dureté du caoutchouc), afin d'équilibrer la pression sur la poutre. Ces coussins ne sont pas non plus vraiment satisfaisants dans la mesure où ils ne procurent pas un équilibrage suffisant de pression, la feuille de verre risquant ainsi d'être soumise à des différences de pression locales importantes provoquant une irrégularité indésirable de la cassure au niveau de la ligne d'incision dans ladite feuille de verre.

### Brève description de l'invention

L'objet de l'invention est de procurer un appareil du type ci-dessus et qui, d'une manière particulièrement simple, bon marché et silencieuse, permette de couper de façon optimale la feuille de verre le long de la ligne d'incision, c'est-à-dire de manière à ce que la surface fracturée soit nette et, par conséquent, dépourvue d'écaillages, d'éclats, de fragmentations, etc.

L'appareil selon l'invention est caractérisé en ce que ladite poutre est formée d'une poutre porteuse sous-jacente et, facultativement, d'une poutre de pression supérieure et/ou inférieure disposée essentiellement parallèlement à ladite poutre porteuse, ladite poutre de pression étant conçue pour presser contre la feuille de verre, à côté de la poutre porteuse, la poutre ou les poutres étant pourvues de moyens d'équilibrage des contraintes pour équilibrer les contraintes dans le verre causées par ladite poutre ou lesdites poutres, lesdits moyens d'équilibrage des contraintes du côté tourné vers la feuille de verre comprenant au moins un organe en tuyau flexible rempli de fluide ou de gaz et constitué d'un matériau élastique pour équilibrer les forces et les moments de flexion transmis par ladite poutre venant au contact de ladite feuille de verre. De ce fait, les moyens d'équilibrage des contraintes sont toujours capables d'égaliser les forces qui sont transférées des poutres au verre lors de la rupture et les moyens d'équilibrage des contraintes peuvent simultanément transférer des forces suffisamment importantes. De plus, la rupture se fait à un niveau de bruit réduit dans la mesure où l'on a évité le bruit engendré par la fuite d'air. L'appareil est par ailleurs très simple.

Chaque moyen d'équilibrage des contraintes peut, selon l'invention, comprendre une bande d'équilibrage pourvue d'une section transversale essentiellement en forme de U et constituée d'un matériau élastique, ladite bande d'équilibrage étant conçue pour coopérer de manière télescopique avec la poutre en question, ledit organe en tuyau flexible étant inséré entre ladite bande d'équilibrage et ladite poutre. De ce fait, les poutres de pression et la poutre porteuse peuvent opérer d'une façon très sûre.

L'appareil selon l'invention peut comprendre des organes de réglage de la pression pour régler la pression hydraulique ou pneumatique régnant dans l'organe en tuyau flexible. De cette manière, on assure la meilleure utilisation possible des organes en tuyau flexible ainsi que la simplification structurelle de l'équipement.

Par ailleurs, la bande d'équilibrage de chaque poutre de pression peut être, selon l'invention, plane ou légèrement arrondie du côté tourné vers la feuille de verre, si bien que la bande d'équilibrage de la poutre porteuse est de préférence arrondie selon un rayon de courbure inférieur au rayon de courbure des bandes d'équilibrage des poutres de pression, ladite bande d'équilibrage de la poutre porteuse étant conçue pour venir buter contre la feuille de verre sous la ligne d'incision découpée. On obtient, de ce fait, sur la feuille de verre, une surface brisée très nette au niveau de la ligne d'incision.

Deux organes en tuyau flexible, ou plus, peuvent, selon l'invention, être insérés entre la bande d'équilibrage et chaque poutre, lesdits organes en tuyau flexible étant disposés les uns au-dessus des autres ou deux, ou plus, les uns à côté des autres, ladite bande d'équilibrage et lesdits organes en tuyau flexible s'étendant essentiellement sur toute la longueur de la poutre. Ce mode de réalisation s'est avéré particulièrement avantageux dans la mesure où la fonction d'équilibrage des contraintes peut être complétée par des fonctions de montée en pression et d'adaptation physique.

En outre, l'organe en tuyau flexible peut, selon l'invention, être avantageusement constitué de matière plastique, de caoutchouc ou métal élastiques, si bien que la pression dans le fluide hydraulique dans l'organe en tuyau flexible peut se situer dans la plage de 0 à 1 MPa lorsque ledit organe en tuyau flexible est libre, c'est-à-dire ne touche pas le verre, et tandis que la pression de gaz dans un organe en tuyau flexible rempli d'air peut se situer dans la plage de 0,1 à 1 MPa lorsque ledit moyen en tuyau flexible est libre, c'est-à-dire ne touche pas le verre.

Dans l'organe en tuyau flexible ou les organes en tuyau flexible, la bande d'équilibrage et l'organe principal de chaque poutre peuvent, selon l'invention, être collés ensemble, par exemple au moyen d'un adhésif élastique, comme de la colle à base de polysulfure ou de la colle silicone. Le mode de réalisation résultant de l'appareil est particulièrement simple.

Enfin, chaque organe en tuyau flexible peut, selon l'invention, avantageusement être renforcé avec de la fibre de verre.

### Brève description des dessins

L'invention est expliquée en détail ci-dessous en référence au dessin, dans lequel
la figure 1 est une vue schématique et en perspective d'un mode de réalisation de l'appareil selon l'invention comportant deux poutres de pression et une poutre porteuse,
la figure 2 illustre, à plus grande échelle, le mode de réalisation de la figure 1, vu de la gauche vers la droite de la figure 1,
la figure 3 est une vue en coupe transversale schématique d'un mode de réalisation de l'appareil, dans laquelle les moyens d'équilibrage des contraintes comprennent un ou deux organes en tuyau flexible,
la figure 4 est une vue en coupe transversale d'un deuxième mode de réalisation comportant une poutre porteuse et une poutre de pression supérieure, chaque poutre ne comprenant qu'un seul organe en tuyau flexible,
la figure 5 est une vue en coupe transversale d'un mode de réalisation comportant une seule poutre porteuse, et
la figure 6 est une vue schématique d'un organe en tuyau flexible sur toute sa longueur et partiellement à moitié dilaté et partiellement complètement dilaté, dans laquelle la petite figure à droite est une vue en bout de l'organe en tuyau flexible.

### Meilleur mode de mise en oeuvre de l'invention

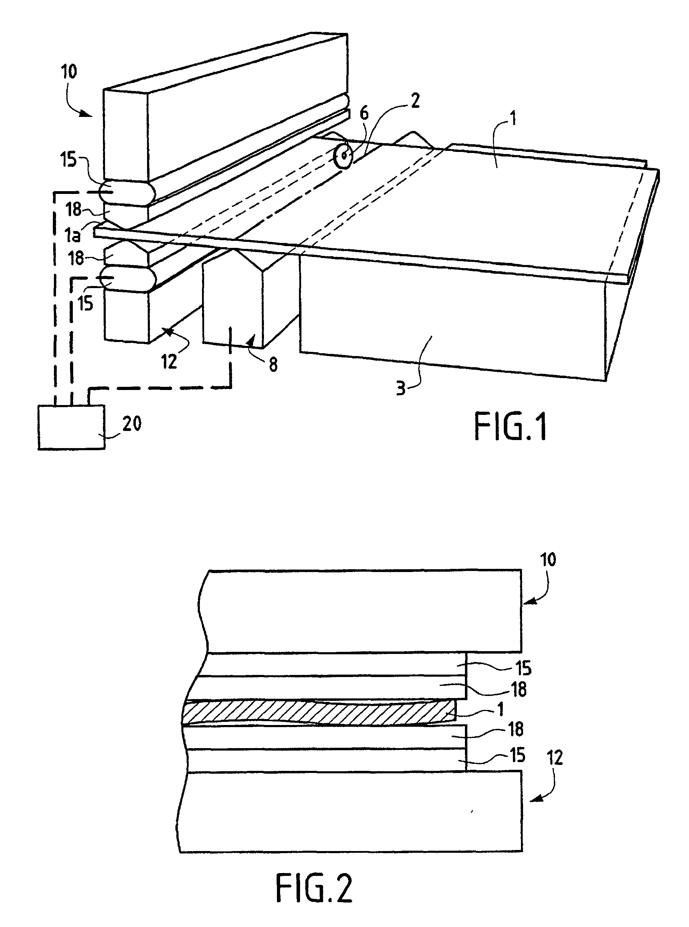

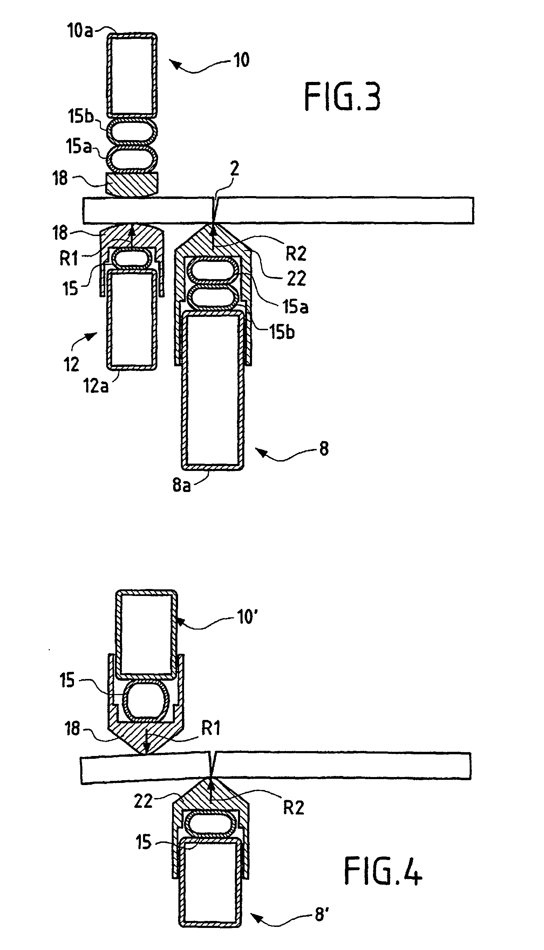

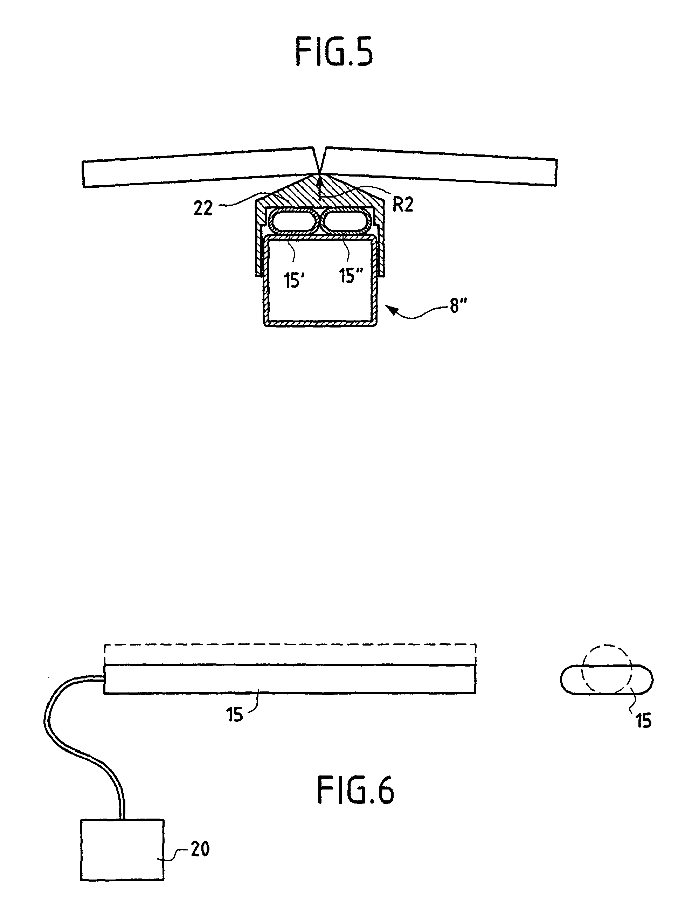

Le mode de réalisation de l'appareil illustré à la figure 1 convient pour couper une feuille de verre 1 le long d'une ligne d'incision 2 découpée dans la feuille. L'appareil comprend un châssis de support 3 supportant la feuille de verre à couper, et un moyen de découpe du verre 6 pour produire la ligne d'incision 2, ledit moyen de découpe du verre étant, par exemple, une molette mobile. L'appareil comprend en outre une poutre porteuse sous-jacente 8 qui peut être disposée sous la ligne d'incision 2, ainsi que des poutres de pression supérieure 10 et inférieure 12 disposées essentiellement parallèlement à la poutre porteuse 8. Les poutres de pression 10 et 12 sont conçues pour presser contre la feuille de verre 1 le long d'une zone de bord 1a en un emplacement proche de la poutre porteuse 8. Les poutres de pression 10 et 12 et la poutre porteuse 8 sont pourvues de moyens 15, 15a, 15b pour équilibrer les contraintes causées dans le verre par chaque poutre entrant au contact avec la feuille de verre. Comme illustré à la figure 4, un mode de réalisation de l'appareil peut être pourvu d'une poutre de pression supérieur 10' et d'une poutre de pression inférieure 8'. Les modes de réalisation illustrés aux figures 1, 3 et 4 conviennent particulièrement lorsque la zone de la feuille de verre à couper est une zone de bord étroite. Lorsque la feuille de verre doit être séparée au milieu ou près du milieu, il est possible de n'inclure qu'une seule poutre porteuse 8", cf. figure 5, qui est disposée comme illustré, sous la ligne d'incision 2 dans ladite feuille de verre. Ici, le poids de la feuille de verre suffit pour faire en sorte que la rupture le long de la ligne d'incision 2 se produise lorsque la poutre porteuse 8" est légèrement relevée.

Comme illustré à la figure 3, les moyens d'équilibrage des contraintes comprennent au moins un organe en tuyau flexible 15, 15a, 15b rempli de fluide ou de gaz et constitué d'un matériau élastique pour équilibrer les forces et les moments de flexion transférés de la poutre en question à la feuille de verre. Chaque organe en tuyau flexible peut être complètement fermé, c'est-à-dire fermé aux deux extrémités, ou il peut être connecté à des moyens de réglage de la pression 20, cf. figure 6.

Comme illustré également aux figures 3, 4 et 5, chaque moyen d'équilibrage des contraintes peut être connecté à une bande d'équilibrage 18, 22 pourvue d'une section transversale essentiellement en forme de U et constituée d'un matériau élastique. Cette bande d'équilibrage peut coopérer avec la portion principale 12a, 10a et 8a de la poutre en question d'une manière télescopique, les organes en tuyau flexible 15 ou 15a, 15b étant insérés entre ladite bande d'équilibrage et ladite portion principale.

Les moyens de réglage de la pression 20 sont facultativement connectés à l'organe en tuyau flexible 15 ou aux organes 15a, 15b et peuvent y régler la pression hydraulique ou bien pneumatique. Les moyens de réglage de la pression sont typiquement une pompe ou un compresseur.

Du côté tourné vers la feuille de verre 1, la bande d'équilibrage 18 de chaque poutre de pression peut être plane, mais la bande d'équilibrage 18 peut être également légèrement arrondie, cf. figure 3. La bande d'équilibrage 22 de la poutre porteuse peut venir buter directement contre la feuille de verre 1 en dessous de la ligne d'incision 2 découpée. La bande d'équilibrage 22 est de préférence arrondie selon un rayon de courbure R₂ inférieur au rayon de courbure R₁ des bandes d'équilibrage 18 des poutres de pression.

A la figure 3, les organes en tuyau flexible 15a, 15b sont disposés les uns sur les autres et sont insérés entre la bande d'équilibrage 18, et respectivement 22, et la portion principale 10a, et respectivement 8a, et ils peuvent s'étendre essentiellement sur toute la longueur de la poutre. Les organes en tuyau flexible peuvent également être disposés côte à côte, cf. figure 5 en 15' et 15". Selon encore une autre option, qui n'est pas illustrée, chaque poutre peut comprendre trois organes en tuyau flexible, ou plus.

Les organes en tuyau flexible 15, 15a, 15b, 15' et 15" peuvent être constitués de matière plastique, de caoutchouc ou de métal élastiques, tandis que la pression dans le fluide hydraulique ou la pression du gaz, respectivement, régnant dans l'organe en tuyau flexible peut se situer respectivement dans la plage de 0 à 1 MPa et dans la plage de 0,1 à 1 MPa, lorsque ledit organe en tuyau flexible est libre.

Les bandes d'équilibrage 18, 22 peuvent être constituées de matière plastique, de fibres ou de matériau de bois élastiques.

Comme illustré à la figure 1, la bande d'équilibrage ne doit pas être nécessairement télescopique, et l'organe ou les organes en tuyau flexible 15, 15a, 15b, la bande d'équilibrage 18 ou 22 et la portion principale de chaque poutre peuvent être collés ensemble, comme au moyen d'une colle élastique telle que de la colle à base de polysulfure ou de la colle silicone. Chaque organe en tuyau flexible peut être renforcé avec de la fibre de verre.

Les modes de réalisation de l'appareil illustrés aux figures 1, 2 et 3 fonctionnent de manière à ce que, lorsque une zone de bord 1 de la feuille de verre 1 doit être coupée, la poutre porteuse s'élève pour venir buter contre le dessous de la feuille de verre 1 pendant que les poutres de pression 10 et 12 se déplacent de chaque côté de la feuille de verre 1 pour venir buter contre ladite feuille de verre 1. La poutre de pression 12 est alors pressée activement contre le verre tandis que la poutre supérieure 10 a la possibilité de s'affaisser légèrement, ladite poutre supérieure étant à présent passive. Ladite zone de bord la est coupée de façon nette le long de la ligne d'incision 2 du fait que les organes en tuyau flexible empêchent l'apparition de forces locales importantes sur la feuille de verre, et donc de contraintes importantes dans ladite feuille qui pourraient sinon donner un aspect indésirable et malheureux à la surface coupée. La figure 2 montre particulièrement clairement, légèrement au-dessus du milieu, la façon dont les organes en tuyau flexible 15 et leurs bandes d'équilibrage 18 s'adaptent à une feuille de verre 1 irrégulière. Les bandes d'équilibrage et les organes en tuyau flexible équilibrent les forces dans le verre à un très haut niveau.

L'organe 3 est indiqué ci-dessus comme étant un châssis de support. Toutefois, rien ne l'empêche d'être une table.

## Revendications

1. Appareil pour couper des feuilles de verre (1) le long d'une ligne d'incision (2) découpée dans les feuilles, ledit appareil comprenant un châssis de support (3) pour la feuille de verre (1) à couper, un moyen de découpe du verre (6), comme une molette mobile en acier et au moins une poutre susceptible de casser la feuille de verre, **caractérisé en ce que** ladite au moins une poutre est formée d'une poutre porteuse sous-jacente (8) et, facultativement, d'une poutre de pression supérieure et/ou inférieure (10, 12) disposée essentiellement parallèlement à ladite poutre porteuse, ladite poutre de pression étant conçue pour presser contre la feuille de verre (1), à côté de la poutre porteuse (8), la poutre ou les poutres étant pourvues de moyens d'équilibrage des contraintes pour équilibrer les contraintes dans le verre causées par ladite poutre ou lesdites poutres, lesdits moyens d'équilibrage des contraintes du côté tourné vers la feuille de verre (1), comprenant au moins un organe en tuyau flexible (15) rempli de fluide ou de gaz et constitué d'un matériau élastique pour équilibrer les forces et les moments de flexion transmis par ladite poutre (8, 10, 12) venant au contact de ladite feuille de verre (1).

2. Appareil selon la revendication 1, **caractérisé en ce que** chaque moyen d'équilibrage des contraintes comprend une bande d'équilibrage (18, 22) pourvue d'une section transversale essentiellement en forme de U et constituée d'un matériau élastique, ladite bande d'équilibrage étant conçue pour coopérer de manière télescopique avec la poutre en question, ledit organe ou lesdits organes en tuyau flexible (15, 15a, 15b) étant inséré(s) entre ladite bande d'équilibrage (18, 22) et ladite poutre.

3. Appareil selon l'une des revendications 1 ou 2, **caractérisé en ce que** des moyens de réglage de la pression (20) sont connectés à l'organe ou aux organes en tuyau flexible (15, 15a, 15b) pour régler la pression hydraulique ou pneumatique régnant dans ledit organe en tuyau flexible.

4. Appareil selon la revendication 1, 2 ou 3, **caractérisé en ce que** la bande d'équilibrage (18) de chaque poutre de pression (10, 12) est plane ou légèrement arrondie du côté tourné vers la feuille de verre (1a), et **en ce que** la bande d'équilibrage (22) de la poutre porteuse (8) est de préférence arrondie selon un rayon de courbure (R₂) inférieur au rayon de courbure (R₁) des bandes d'équilibrage des poutres de pression, ladite bande d'équilibrage de la poutre porteuse étant conçue pour venir buter contre la feuille de verre (1) sous la ligne d'incision (2) découpée.

5. Appareil selon l'une des revendications 1 à 4, **caractérisé en ce que** deux organes en tuyau flexible, ou plus, (15, 15a, 15b, 15', 15") sont insérés entre la bande d'équilibrage (18, 22) et la portion principale (8a, 10a, 12a) de chaque poutre, lesdits organes en tuyau flexible (15, 15a, 15b, 15', 15") étant disposés les uns au-dessus des autres, ou deux, ou plus, les uns à côté des autres, ladite bande d'équilibrage et lesdits organes en tuyau flexible s'étendant essentiellement sur toute la longueur de la poutre.

6. Appareil selon l'une des revendications 1 à 5, **caractérisé en ce que** l'organe en tuyau flexible (15, 15a, 15b) est constitué de matière plastique, de caoutchouc ou métal élastiques, et **en ce que** la pression dans le fluide hydraulique et la pression de gaz dans l'organe en tuyau flexible, respectivement, se situent dans la plage de 0 à 1 MPa et la plage de 0,1 à 1 MPa, lorsque ledit organe en tuyau flexible est libre, c'est-à-dire ne touche pas le verre.

7. Appareil selon l'une des revendications 1 à 6, **caractérisé en ce que** la bande d'équilibrage (18, 22) est constituée de matière plastique, de fibres ou de matériau de bois élastiques.

8. Appareil selon l'une des revendications 1 à 7, **caractérisé en ce que** l'organe ou les organes en tuyau flexible (15, 15a, 15b), la bande d'équilibrage (18, 22) et la portion principale (8a, 10a, 12a) de chaque poutre peuvent être collés ensemble, comme au moyen d'une colle élastique telle que de la colle à base de polysulfure ou de la colle silicone.

9. Appareil selon l'une des revendications 1 à 8, **caractérisé en ce que** l'organe ou les organes en tuyau flexible (15, 15a, 15b) sont renforcés avec de la fibre de verre.

## Patentansprüche

1. Vorrichtung zum Zuschneiden von Glasscheiben (1) entlang einer Anreißlinie (2), die in die Scheiben geschnitten worden ist, welche ein Tragegestell (3) für die zuzuschneidende Glasscheibe (1), ein Mittel (6) zum Anreißen des Glases wie ein bewegliches stählernes Rändelrädchen und mindestens einen Träger, der in der Lage ist, die Glasscheibe zu zerbrechen, umfasst, **dadurch gekennzeichnet, dass** dieser mindestens eine Träger von einem darunter befindlichen unterstützenden Träger (8) und wahlweise von einem darüber und/oder darunter liegenden Druck-Träger (10, 12) gebildet wird, der im Wesentlichen parallel zum unterstützenden Träger angeordnet ist, wobei der Druck-Träger derart konstruiert ist, dass er auf die Glasscheibe (1) neben dem unterstützenden Träger (8) drückt, der/die Träger mit Mitteln zum Ausgleichen der Spannungen versehen ist/sind, um die Spannungen im Glas auszugleichen, die von dem/den Träger/n verursacht werden, und die Mittel zum Ausgleichen der Spannungen auf der zur Glasscheibe (1) gerichteten Seite mindestens ein Organ (15) in Form eines Schlauchs umfassen, der mit einem Fluid oder Gas gefüllt ist und aus einem elastischen Material besteht, um die Kräfte und Biegemomente auszugleichen, die von dem Träger (8, 10, 12) übertragen werden, die mit der Glasscheibe (1) in Berührung kommen.

2. Vorrichtung nach Anspruch 1, **dadurch gekennzeichnet, dass** die Mittel zum Ausgleichen der Spannungen jeweils ein Ausgleichsband (18, 22), das mit einem im Wesentlichen U-förmigen Querschnitt versehen ist und aus einem elastischen Material besteht, umfassen, wobei das Ausgleichsband entworfen ist, um teleskopartig mit dem betreffenden Träger zusammenzuwirken, und das/die aus einem Schlauch bestehende/n Organ/e (15, 15a, 15b) zwischen dem Ausgleichsband (18, 22) und dem Träger eingefügt wird/werden.

3. Vorrichtung nach Anspruch 1 oder 2, **dadurch gekennzeichnet, dass** Mittel (20) zur Regelung des hydraulischen oder pneumatischen Drucks, der in dem aus einem Schlauch bestehenden Organ herrscht, an das/die aus einem Schlauch bestehende/n Organ/e (15, 15a, 15b) angeschlossen sind.

4. Vorrichtung nach Anspruch 1, 2 oder 3, **dadurch gekennzeichnet, dass** das Ausgleichband (18) eines jeden Druckträgers (10, 12) auf der zur Glasscheibe zeigenden Seite (la) plan oder leicht abgerundet ist, **und dass** das Ausgleichband (22) des unterstützenden Trägers (8) vorzugsweise mit einem Krümmungsradius (R₂) abgerundet ist, der kleiner als der Krümmungsradius (R₁) der Ausgleichbänder der Druck-Träger ist, wobei das Ausgleichband des unterstützenden Trägers konstruiert ist, um auf der Glasscheibe (1) unter der angeschnittenen Anreißlinie (2) zum Anschlag zu kommen.

5. Vorrichtung nach einem der Ansprüche 1 bis 4, **dadurch gekennzeichnet, dass** zwei oder mehr aus einem Schlauch bestehende Organe (15, 15a, 15b, 15', 15") zwischen dem Ausgleichsband (18, 22) und dem Hauptteil (8a, 10a, 12a) eines jeden Trägers eingefügt sind, wobei die aus einem Schlauch bestehenden Organe (15, 15a, 15b, 15', 15") übereinander bzw. zwei oder mehr nebeneinander angeordnet sind und das Ausgleichsband und die aus einem Schlauch bestehenden Organe sich im Wesentlichen über die gesamte Länge des Trägers erstrecken.

6. Vorrichtung nach einem der Ansprüche 1 bis 5, **dadurch gekennzeichnet, dass** das aus einem Schlauch bestehende Organ (15, 15a, 15b) aus einem Kunststoff, Kautschuk oder elastischen Metall besteht, **und dass** der Druck im Hydraulikfluid und der Gasdruck in dem aus einem Schlauch bestehenden Organ im Bereich von 0 bis 1 MPa bzw. in einem Bereich von 0,1 bis 1 MPa liegt, wenn das aus einem Schlauch bestehende Organ frei ist, d.h. das Glas nicht berührt.

7. Vorrichtung nach einem der Ansprüche 1 bis 6, **dadurch gekennzeichnet, dass** das Ausgleichsband (18, 22) aus Kunststoff, Fasermaterial oder einem elastischen Holzmaterial besteht.

8. Vorrichtung nach einem der Ansprüche 1 bis 7, **dadurch gekennzeichnet, dass** das/die aus einem Schlauch bestehende/n Organ/e (15, 15a, 15b), das Ausgleichsband (18, 22) und der Hauptteil (8a, 10a, 12a) eines jeden Trägers durch einen elastischen Klebstoff wie einen Klebstoff auf der Basis von Polysulfid oder einen Siliconklebstoff miteinander verklebt sein können.

9. Vorrichtung nach einem der Ansprüche 1 bis 8, **dadurch gekennzeichnet, dass** das/die aus einem Schlauch bestehende/n Organ/e (15, 15a, 15b) mit Glasfasern verstärkt ist/sind.

## Claims

1. Apparatus for cutting sheets of glass (1) along an incision line (2) carved in the sheets, said apparatus comprising a support frame (3) for the sheet of glass (1) to be cut, a means of carving the glass (6), such as a movable glass cutter made of steel and at least one beam capable of breaking the sheet of glass, **characterised in that** said at least one beam is formed from an underlying supporting beam (8) and, optionally, an upper and/or lower pressure beam (10, 12) disposed essentially parallel to said supporting beam, said pressure beam being designed for pressing against the sheet of glass (1), next to the supporting beam (8), the beam or beams being provided with stress balancing means for balancing the stresses in the glass caused by said beam or said beams, said stress balancing means on the side turned towards the sheet of glass (1), comprising at least one flexible tube member (15) filled with fluid or gas and consisting of an elastic material for balancing the forces and bending moments transmitted by said beam (8, 10, 12) coming into contact with said sheet of glass (1).

2. Apparatus according to Claim 1, **characterised in that** each stress balancing means comprises a balancing strip (18, 22) provided with a transverse section essentially in the shape of a U and consisting of an elastic material, said balancing strip being designed to cooperate telescopically with the beam in question, said flexible tube member or said flexible tube members (15, 15a, 15b) being inserted between said balancing strip (18, 22) and said beam.

3. Apparatus according to either of Claim 1 or 2, **characterised in that** pressure adjusting means (20) are connected to the flexible tube member or members (15, 15a, 15b) in order to adjust the hydraulic or pneumatic pressure prevailing in said flexible tube member.

4. Apparatus according to Claim 1, 2 or 3, **characterised in that** the balancing strip (18) of each pressure beam (10, 12) is flat or slightly rounded on the side turned towards the sheet of glass (1a), and **in that** the balancing strip (22) of the supporting beam (8) is preferably rounded according to a radius of curvature (R₂) smaller than the radius of curvature (R₁) of the balancing strips of the pressure beams, said balancing strip of the supporting beam being designed to come to abut against the sheet of glass (1) under the carved incision line (2).

5. Apparatus according to one of Claims 1 to 4, **characterised in that** two flexible tube members, or more, (15, 15a, 15b, 15', 15") are inserted between the balancing strip (18, 22) and the main portion (8a, 10a, 12a) of each beam, said flexible tube members (15, 15a, 15b, 15', 15") being disposed one above another, or two, or more, one beside another, said balancing strip and said flexible tube members extending essentially over the entire length of the beam.

6. Apparatus according to one of Claims 1 to 5, **characterised in that** the flexible tube member (15, 15a, 15b) consists of elastic plastic, rubber or metal, and **in that** the pressure in the hydraulic fluid and the gas pressure in the flexible tube member, respectively, are situated in the range from 0 MPa to 1 MPa and the range from 0.1 MPa to 1 MPa, when said flexible tube member is free, that is to say is not touching the glass.

7. Apparatus according to one of Claims 1 to 6, **characterised in that** the balancing strip (18, 22) consists of elastic plastic, fibres or wooden material.

8. Apparatus according to one of Claims 1 to 7, **characterised in that** the flexible tube member or members (15, 15a, 15b), the balancing strip (18, 22) and the main portion (8a, 10a, 12a) of each beam can be bonded together, such as by means of an elastic adhesive such as polysulphide-based adhesive or silicone adhesive.

9. Apparatus according to one of Claims 1 to 8, **characterised in that** the flexible tube member or members (15, 15a, 15b) are reinforced with glass fibre.
